(19)

Europäisches
Patentamt
European
Patent Office
Office européen
des brevets

(11)     **EP 2 090 407 A1**

(12)          **EUROPEAN PATENT APPLICATION**

(43) Date of publication:
   **19.08.2009   Bulletin 2009/34**

(51) Int Cl.:
   **B25J 9/16** (2006.01)

(21) Application number: **08021287.1**

(22) Date of filing: **08.12.2008**

(84) Designated Contracting States:
   **AT BE BG CH CY CZ DE DK EE ES FI FR GB GR
   HR HU IE IS IT LI LT LU LV MC MT NL NO PL PT
   RO SE SI SK TR**
   Designated Extension States:
   **AL BA MK RS**

(30) Priority:  **08.02.2008   JP 2008029355**

(71) Applicant: **Fanuc Ltd
   Yamanashi 401-0597 (JP)**

(72) Inventors:
   • **Kato, Tetsuaki
     Yamanashi 401-0597 (JP)**
   • **Inagaki, Shougo
     Yamanashi 401-0597 (JP)**

(74) Representative: **Thum, Bernhard
   Wuesthoff & Wuesthoff
   Patent- und Rechtsanwälte
   Schweigerstrasse 2
   81541 München (DE)**

(54)     **Robot controller having component protecting function and robot control method**

(57)     A robot controller and a robot control method, by which each element constituting a robot is protected. An output of a rotary encoder attached to a servomotor is read, and the motor speed is obtained by calculating the difference between a current speed and another speed in a previous speed loop. Then, a processor of the servo controller of each link of a robot arm executes a normal speed loop control in order to calculate a torque command of the motor. Next, a load torque is estimated by using the obtained torque command and the motor speed, and the estimated load torque in each speed loop is compared with a predetermined threshold. If the load torque is larger than the threshold in at least one of the axes, the robot controller judges that an abnormality has occurred in the robot, generates an alarm or warning, and then controls the robot so as to protect the element.

Fig.3

```
                    ┌─────────┐
                    │  START  │
                    └────┬────┘
                         │
S1 ──┌──────────────────────────────────┐
     │      OBTAIN MOTOR SPEED V         │
     └──────────────────┬───────────────┘
                         │
S2 ──┌──────────────────────────────────┐
     │   CALCULATE TORQUE COMMAND T_c    │
     └──────────────────┬───────────────┘
                         │
S3 ──┌──────────────────────────────────┐
     │    CALCULATE LOAD TORQUE T_r      │
     └──────────────────┬───────────────┘
                         │
          S4 ──◇────────────────◇  No
              ◇   T_r > L        ◇──────┐
               ◇     ?          ◇       │
                ◇──────◇                │
                    │ Yes               │
S5 ──┌──────────────────────────────────┐   │
     │    GENERATE ALARM OR WARNING     │   │
     └──────────────────┬───────────────┘   │
                         │                   │
S6 ──┌──────────────────────────────────┐   │
     │  EXECUTE ELEMENT PROTECTING MOTION│   │
     └──────────────────┬───────────────┘   │
                         │◄──────────────────┘
                    ┌────┴────┐
                    │   END   │
                    └─────────┘
```

EP 2 090 407 A1

**Description**

RELATED APPLICATIONS

The present application claims priority from Japanese Patent Application No. 2008-29355, filed on February 8, 2008, the entire content of which is fully incorporated herein by reference.

BACKGROUND OF THE INVENTION

1. Field of the Invention

The present invention relates to a robot controller for controlling a multi-joint robot (hereinafter, referred to as "a robot"), and in particular, a robot controller having a function for protecting each component of the robot and a control method of the robot.

2. Description of the Related Art

As a function for protecting a robot from overload, a collision detecting function is known. For example, Japanese Unexamined Patent Publication No. 11-15511 discloses a technique for estimating a disturbance applied to a motor for driving each axis of a robot and judging that a collision occurs if an estimated value is larger than a predetermined threshold.

Japanese Unexamined Patent Publication No. 2005-186183 discloses a method for judging a malfunction of an industrial robot. In the method, a torque command value for activating a servomotor, a differential value of an actual position of the robot, and a total feedback value based on a known disturbance torque are calculated, and then a malfunction of the robot is judged by calculating a malfunction detection threshold based on the feedback value and an estimated speed of the robot.

In the prior art, a function for detecting collision or a disturbance is intended to detect torque applied to a motor or a front end of a robot arm. However, even when such a function is used to detect a collision or the like and stop the motor, each component of the robot such as a reducer or a cable may not be sufficiently protected. In other words, even when torque applied to the motor or the front end of the robot arm is smaller than the threshold, a large load may be locally applied to a component of the reducer. In such a case, an abnormality cannot be effectively detected by a method of the prior art, whereby the component may be damaged.

In the prior art, even when collision does not occur (i.e., a robot is normally operated), it is not assured that torque applied to each component does not exceed a range within which the torque cannot damage the component.

SUMMARY OF THE INVENTION

Accordingly, an object of the present invention is to provide a robot controller and a robot control method, by which each element or component constituting a robot is protected.

According to one aspect of the present invention, there is provided a robot controller for controlling a robot having a robot arm driven by a motor, the robot controller comprising: an estimating part estimating a load torque applied to an element to be protected positioned between the robot arm and the motor driving the robot arm, based on a speed and a torque command of the motor; a detecting part detecting an abnormality by comparing a value of the estimated load torque to a predetermined threshold; and a processing part executing a process for protecting the element to be protected when the abnormality is detected.

The estimating part may estimates the load torque applied to the element to be protected, by using the inertia of the element to be protected and the inertia of the motor and a dynamic friction coefficient of the element to be protected.

A preferred example of the estimating part is a disturbance estimation observer.

The robot controller may further comprise an adjusting part obtaining or estimating the ambient temperature or the temperature of a certain portion of the robot, and adjusting the threshold based on the ambient temperature or the temperature of the certain portion of the robot.

The processing part may stop the motion of the robot when the abnormality is detected. Alternatively, the processing part may decelerate the motion of the robot when the abnormality is detected. Otherwise, the processing part may move the robot in a direction for a certain period of time such that the load torque of each axis of the robot decreases.

As a preferred example, the element to be protected includes at least one of a speed reducer, a gear and a cable used in the robot.

According to another aspect of the present invention, there is provided a method for controlling a robot having a robot arm driven by a motor, the method comprising the steps of: estimating a load torque applied to an element to be protected positioned between the robot arm and the motor driving the robot arm, based on a speed and a torque command of the motor; detecting an abnormality by comparing a value of the estimated load torque to a predetermined threshold; and executing a process for protecting the element to be protected when the abnormality is detected.

BRIEF DESCRIPTION OF THE DRAWINGS

The above and other objects, features and advantages of the present invention will be made more apparent by the following description of the preferred embodiments thereof, with reference to the accompanying drawings, wherein:

Fig. 1 is a block diagram showing substantial parts of a robot controller according to one embodiment of the invention;
Fig. 2 is a diagram showing a schematic configuration around a speed reducer capable of being protected by the robot controller;
Fig. 3 shows a flowchart showing the procedure for estimating a load torque applied to an object to be protected and protecting the object;
Fig. 4 is a block diagram showing an estimating part estimating a load torque applied to the speed reducer to be protected;
Fig. 5 is a block diagram showing a disturbance estimation observer as an alternative example of the estimating part;
Fig. 6 is a diagram showing a schematic configuration around a gear assembly capable of being protected by the robot controller; and
Fig. 7 is a diagram showing a schematic configuration around a cable capable of being protected by the robot controller.

DETAILED DESCRIPTION

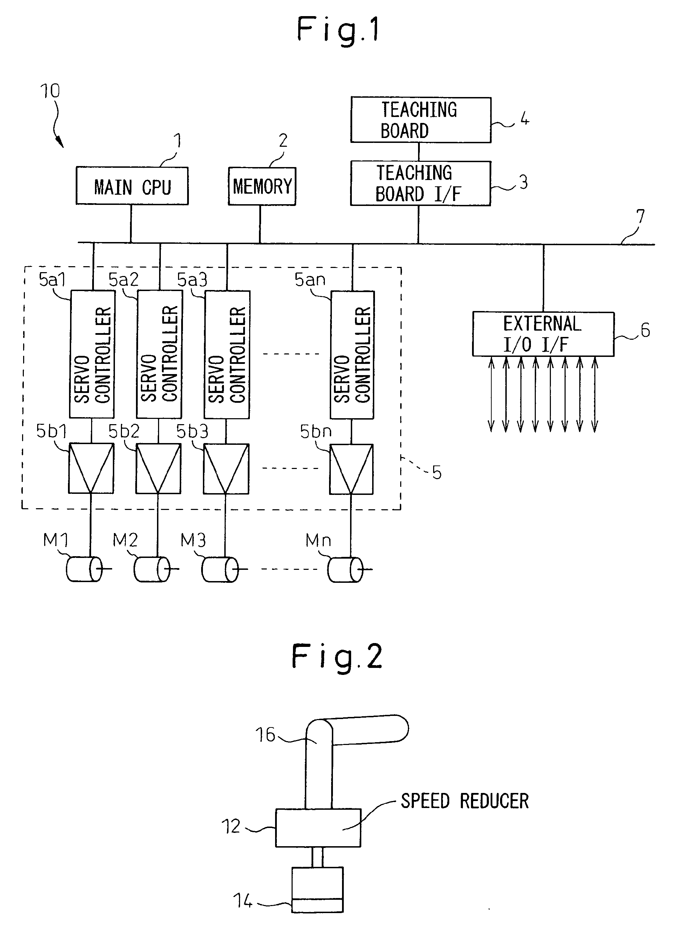

Fig. 1 shows a block configuration showing substantial parts of a robot controller according to one embodiment of the invention. Robot controller 10 has a main CPU 1, a memory 2 including a RAM (random access memory), a ROM (read-only memory) and a non-volatile memory (EEPROM or the like), a teaching board interface 3, a servo control unit 5 and an I/O interface 6 for external units, which are connected each other via a bus 7. Robot controller 10 also has a teaching operation board 4 connected to teaching board interface 3.

A system program, for supporting the basic function of robot controller 10 and a robot (not shown) to be controlled by the robot controller, is stored in the ROM of memory 2. The motion program of the robot taught according to the application and relevant set data are stored in the non-volatile memory of memory 2. The RAM of memory 2 is used for a storage area to temporarily store various data processed by main CPU 1.

Servo control unit 5 has a plurality of servo controllers 5a1 to 5an, where n is the summation of the number of axes of the robot and the number of movable axes of a tool attached to a wrist of the robot. Servo control unit 5 also has a processor (not shown), a ROM and a RAM, etc., so as to execute loop control of the position and the speed of servomotors M1 to Mn for driving axes of the robot, as well as current loop control. In the embodiment, servo control unit 5 constitute a digital servo controller capable executing loop control of the position, the speed and the current by using software. An output of servo control unit 5 is used to drive and control servomotors M1 to Mn via servo amplifiers 5b1 to 5bn. A position/speed detector (not shown) so attached to each servomotor and the position and the speed of each servomotor detected by the detector is fed back to each servo controller. A sensor provided to the robot and an actuator for external units, etc., are connected to I/O interface 6.

The present invention is intended to provide a function, for protecting a component or element arranged between a robot arm (or link) and a motor for driving the robot arm, to the robot controller as described above.

Fig. 2 is a diagram schematically showing a speed reducer which is one of elements capable of being protected according to the invention. A speed reducer 12 is positioned between a servomotor 14 and a robot arm 16 and configured to transmit a driving force of servomotor 14 to robot arm 16. It may be considered that reducer 12 and servomotor 14 constitute one rigid body, and thus an outermost portion of the reducer (or a portion of reducer 12 opposed to motor 14) is defined as an object to be protected.

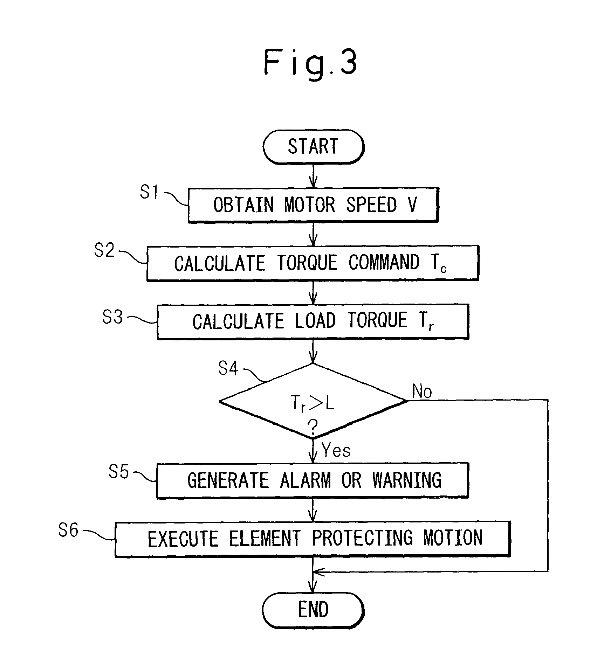

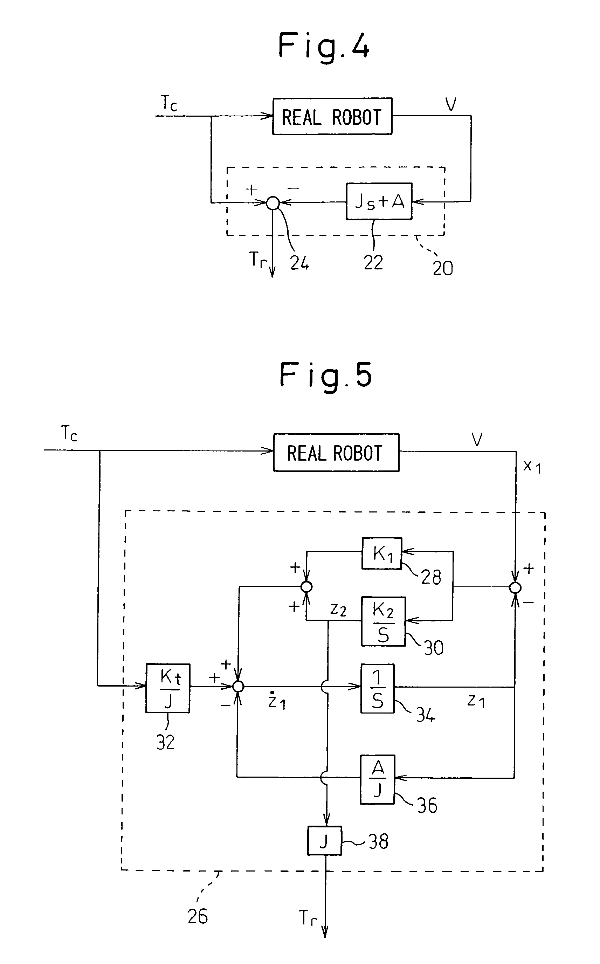

Fig. 3 is a flowchart of the procedure for estimating a load torque applied to an object to be protected and protecting the object, and Fig. 4 is a block diagram showing one example of a processing system when the above reducer is the object to be protected. Hereinafter, the procedure of Fig. 3 will be explained.

First, in step S1, an output $\theta$ of a rotary encoder (not shown) attached to servomotor 14 is read and a motor speed V ($\theta$-dot) is obtained by calculating the difference between current $\theta$ and another $\theta$ in a previous speed loop. Then, a processor of the servo controller of each link of robot arm 16 executes a normal speed loop control in order to calculate a torque command Tc of motor 14 (step S2). In other words, by executing a speed loop control such as a proportional-integral control, based on a move command from main CPU 1 and motor speed V, torque command Tc may be calculated.

In the next step S3, a load torque Tr applied to reducer 12 is calculated by using obtained torque command Tc and motor speed V. Concretely, by using an estimator 20 as shown in Fig. 4, an estimate value of load torque Tr is calculated from torque command Tc and motor speed V. In estimator 20, motor speed V is Laplace-transformed in a term 22, and then a differentiator 24 calculates the difference between the Laplace-transformed value of motor speed V and torque command Tc as load torque Tr of reducer 12. At this point, a character "J" is inertia obtained by adding inertia of motor 14 (exactly inertia of a rotor of the motor) to inertia of the reducer. Also, characters "A" and "s" are a dynamic friction coefficient of the object (or reducer 12 in this case) and a Laplace operator, respectively. Accordingly, following equation (1) is true.

$$Tr = Tc - (Js + A) \ V \tag{1}$$

Due to equation (1), load torque Tr, which is considered to be applied to reducer 12, may be calculated. As another means for estimating the load torque, a disturbance estimation observer as described below, a simulation model and a finite element method may be used.

In the next step S4, the calculated load torque Tr in each speed loop is compared with a threshold L, which is previously determined as an acceptable value for each axis. If (Tr > L) is true in at least one of the axes of the robot, the robot controller judges that an error or abnormality has occurred in the robot, and then generates or outputs an alarm or warning (step S5). As the threshold L, a constant previously adjusted for each robot or each element may be used. As another method for determining the threshold L, the threshold may be timely set or updated by means of an input means such as a personal computer (not shown) connected to the external I/O interface. In addition, when the threshold is updated, by measuring or estimating the ambient temperature or the temperature of a component of the robot such as a motor, the threshold may be modified based on the result. Generally, the viscosity of grease increases with decreasing the temperature, whereby the disturbance is increased accordingly. Therefore, when the temperature is relatively low, the threshold L should be increased in order to avoid a misdetection. In addition, a parameter, which may affect the value L such as the ambient temperature, may be automatically measured, and then the value L may be automatically updated or optimized by using a personal computer or the like.

When the alarm or warning is generated, the robot is controlled to perform the motion for protecting the object to be protected (step S6). For example, the robot may be immediately stopped by setting the speed command of each axis to zero. Alternatively, the motion of the robot may be gradually decelerated and stopped by multiplying the speed command by a predetermined value which is larger than zero and smaller than one. Otherwise, the robot may be moved in a direction for a certain period of time, preferably at the maximum output torque of each axis, such that the load torque of each axis decreases, and then the robot may be stopped. Still otherwise, it is possible not to automatically perform the protecting motion but merely to indicate the alarm or warning. In the last case, the operator manually carries out a necessary protecting operation.

Fig. 5 is a block diagram indicating an estimator 26 when the torque Tr applied to reducer 12 is estimated by using disturbance estimation observer. Since a theory of the observer is conventional, the detailed explanation thereof is omitted. The observer as shown in Fig. 5 is an example capable estimating the disturbance of the speed and the acceleration of the motor. Characters $K_1$ and $K_2$ in terms 28 and 30 are observer gains of the disturbance estimation observer, and a character $K_t$ in a term 32 is a torque constant. A term 34 is an integral term which integrates the summation of outputs of terms 28, 30 and 32. A term 36 multiplies an output of term 34 by "A/J", and a term 38 multiplies the output of term 30 by "J" to obtain an estimated torque Tr. Similarly to the above, the character "J" represents inertia obtained by adding inertia of motor 14 to inertia of reducer 12. The characters "A" and "s" are a dynamic friction coefficient of reducer 12 and a Laplace operator, respectively. In this case, a state variable of this robot model is represented by following equation (2).

$$\begin{bmatrix} \dot{x}_1 \\ \dot{x}_2 \end{bmatrix} = \begin{bmatrix} -\dfrac{A}{J} & 1 \\ 0 & 0 \end{bmatrix} \begin{bmatrix} x_1 \\ x_2 \end{bmatrix} + \begin{bmatrix} \dfrac{K_t}{J} \\ 0 \end{bmatrix} u$$

$$y = \begin{bmatrix} 1 & 0 \end{bmatrix} \begin{bmatrix} x_1 \\ x_2 \end{bmatrix} \tag{2}$$

In equation (2), an input is a torque command (u=Tc) and an output is a motor speed (y=V). Further, the state variables are the disturbance of the speed and the acceleration of the motor ($x_1$=V, $x_2$=Tr/J), and differential values of $x_1$ and $x_2$ are represented by characters $x_1$-dot and $x_2$-dot, respectively. In addition, it is assumed that the disturbance of the acceleration is not changed with time ($x_2$-dot is equal to zero).

When estimated values of $x_1$ and $x_2$ are represented by characters $z_1$ and $z_2$, respectively, and differential .values of $z_1$ and $z_2$ are represented by characters $z_1$-dot and $z_2$-dot, respectively, the model of the observer according to equation (2) is represented by following equation (3).

$$\begin{bmatrix} \dot{z}_1 \\ \dot{z}_2 \end{bmatrix} = \begin{bmatrix} -\dfrac{A}{J} & 1 \\ 0 & 0 \end{bmatrix} \begin{bmatrix} z_1 \\ z_2 \end{bmatrix} + \begin{bmatrix} \dfrac{K_t}{J} \\ 0 \end{bmatrix} u + \begin{bmatrix} K_1 \\ K_2 \end{bmatrix} (x_1 - z_1) \qquad (3)$$

Due to equation (3), the disturbance of the acceleration $z_2$ estimated by the observer may be calculated. Therefore, the estimated load torque Tr applied to the reducer is calculated by following equation (4).

$$Tr = J \cdot z_2 \qquad\qquad (4)$$

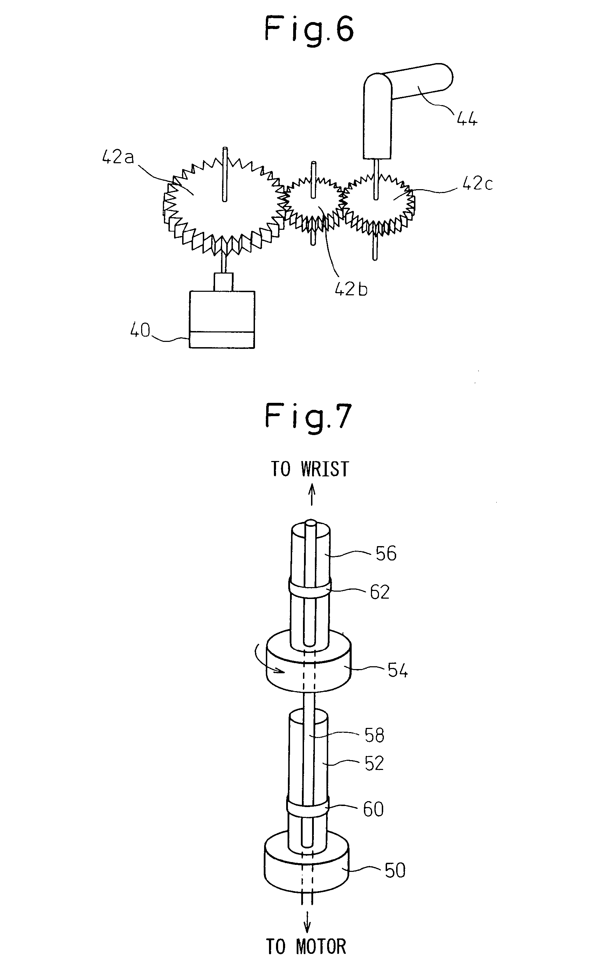

Fig. 6 is a diagram schematically showing a gear as an object to be protected. Fig. 6 shows a gear 42a engaging a servomotor 40, a gear 42c engaging a robot arm 44, and a gear 42b arranged between gears 42a and 42c. The three gears are configured to cooperatively transmit a drive force of servomotor 40 to robot arm 44. In this case, an object to be protected is an outside portion of gear 42a (or a portion of gear 42a engaging gear 42b).

In the case of Fig. 6, an estimated load torque applied to gear 42a may be obtained by generally the same procedure of the reducer as described above. In other words, when character "J" of equation (1) is inertia obtained by adding inertia of motor 40 to inertia of gear 42a, and the character "A" is a dynamic friction coefficient of gear 42a, the estimated load torque Tr applied to gear 42a may be obtained as the summation of disturbance torque applied to gear 42a and torque transmitted to gear 42a from gear 42b.

Fig. 7 is a diagram schematically showing a cable as an object to be protected. The configuration as shown in Fig. 7 has a first arm 52 driven by a front link 50, a second arm 56 driven by a rear link 54, and a cable 58 extending along the first and second arms. Cable 58 extends through each link without being fixed by each link, and is fixed to first arm 52 by a first fixture 60 and to second arm 56 by a second fixture 62.

In this case, a load torque Tr applied to cable 58 at second fixture 62 may be obtained by following equation (5). For simplification, all links other than rear link 54 are assumed to be stopped.

$$Tr = Tc - K \cdot V/s - (Js + A) V \qquad\qquad (5)$$

In equation (5), a character "Tc" is a load torque of a servomotor (not shown) driving rear link 54, and a character "V" is the speed of the servomotor. A character "J" is inertia which is equal to the summation of inertias of the servomotor, rear link 54, second arm 56 and cable 58. Also, characters "A" and "s" are a dynamic friction coefficient between rear link 54 and second arm 56 and a Laplace operator, respectively. In addition, a spring constant "K" in a twisting direction of cable 58 is also considered in equation (5).

As described above, even when there are many kinds of objects to be protected, an estimated load torque for each case may be properly obtained by modifying values J and A corresponding to the kind of the object in step S3, and optionally considering another factor such as a spring constant or a dumper constant, etc.

In Japanese Unexamined Patent Publication No. 11-15511 or Japanese Unexamined Patent Publication No. 2005-186183 as described above, it is not disclosed that each element of a robot is protected by estimating a force or torque other than a force applied to the end of a robot arm. Due to the present invention, torque applied to an object to be protected may be estimated based on the speed and the torque of a motor, whereby the object may be assuredly protected.

In each embodiment as explained above, the torque applied to the object is estimated. However, since torque may be easily converted to a force, the invention may be utilized if the above estimated torque Tr is replaced with an estimated force applied to the object.

According to the robot controller or the robot control method of the invention, a load torque applied to an object to be protected may be estimated based on the speed and a torque command of a motor. Therefore, it is assured that a force applied to each element of a robot is within a predetermined range, whereby each element is properly protected.

The load torque may be estimated by means of a simple estimator which uses inertia and a dynamic friction coefficient of the object to be protected. In order to obtain the load torque without time delay, a disturbance estimation observer may be used.

By adjusting a threshold using the ambient temperature or the temperature of a certain portion of the robot, the abnormality may be detected more precisely.

If the abnormality is detected, the robot may be immediately stopped, decelerated or moved to a safe position, whereby the object may be assuredly protected.

**Claims**

1. A robot controller (10) for controlling a robot having a robot arm (16) driven by a motor (14), **characterized in that** the robot controller comprises:

   an estimating part (20) estimating a load torque applied to an element (12) to be protected positioned between the robot arm (16) and the motor (14) driving the robot arm (16), based on a speed and a torque command of the motor (14);
   a detecting part (1) detecting an abnormality by comparing a value of the estimated load torque to a predetermined threshold; and
   a processing part (1) executing a process for protecting the element (12) to be protected when the abnormality is detected.

2. The robot controller according to claim 1, **characterized in that** the estimating part (20) estimates the load torque applied to the element (12) to be protected, by using the inertia of the element (12) to be protected and the inertia of the motor (14) and a dynamic friction coefficient of the element (12) to be protected.

3. The robot controller according to claim 1, **characterized in that** the estimating part is a disturbance estimation observer (26).

4. The robot controller according to claim 1, further comprising an adjusting part (1) obtaining or estimating the ambient temperature or the temperature of a certain portion of the robot, and adjusting the threshold based on the ambient temperature or the temperature of the certain portion of the robot.

5. The robot controller according to claim 1, **characterized in that** the processing part (1) stops the motion of the robot when the abnormality is detected.

6. The robot controller according to claim 1, **characterized in that** the processing part (1) decelerates the motion of the robot when the abnormality is detected.

7. The robot controller according to claim 1, **characterized in that** the processing part (1) moves the robot in a direction for a certain period of time such that the load torque of each axis of the robot decreases.

8. The robot controller according to claim 1, **characterized in that** the element (12) to be protected includes at least one of a reducer (12), a gear (42a-42c) and a cable (58) used in the robot.

9. A method for controlling a robot having a robot arm (16) driven by a motor (14), **characterized in that** the method comprises the steps of:

   estimating a load torque applied to an element (12) to be protected positioned between the robot arm (16) and the motor (14) driving the robot arm (16), based on a speed and a torque command of the motor (14);
   detecting an abnormality by comparing a value of the estimated load torque to a predetermined threshold; and
   executing a process for protecting the element (12) to be protected when the abnormality is detected.

# Fig.1

# Fig.2

SPEED REDUCER

# Fig.3

```
                    ( START )
                        │
                        ▼
S1 ──┐   ┌────────────────────────────────┐
     │   │   OBTAIN MOTOR SPEED V          │
         └────────────────────────────────┘
                        │
                        ▼
S2 ──┐   ┌────────────────────────────────┐
     │   │  CALCULATE TORQUE COMMAND $T_c$ │
         └────────────────────────────────┘
                        │
                        ▼
S3 ──┐   ┌────────────────────────────────┐
     │   │   CALCULATE LOAD TORQUE $T_r$   │
         └────────────────────────────────┘
                        │
                        ▼
S4 ──┐      ╱◇╲
     │    ╱      ╲          No
        ◇  $T_r > L$  ◇ ─────────────┐
          ╲    ?    ╱                 │
            ╲    ╱                    │
              │ Yes                   │
              ▼                       │
S5 ──┐   ┌────────────────────────┐   │
     │   │ GENERATE ALARM OR WARNING │ │
         └────────────────────────┘   │
              │                       │
              ▼                       │
S6 ──┐ ┌──────────────────────────────┐
     │ │ EXECUTE ELEMENT PROTECTING MOTION │
       └──────────────────────────────┘
              │                       │
              ▼◄──────────────────────┘
           ( END )
```

8

# Fig.4

# Fig.5

# Fig.6

44

42a

42c

42b

40

# Fig.7

TO WRIST

↑

56

62

54

58

52

60

50

↓

TO MOTOR

Europäisches
Patentamt

European
Patent Office

Office européen
des brevets

# EUROPEAN SEARCH REPORT

Application Number

EP 08 02 1287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 464 211 A (FANUC LTD [JP]) 8 January 1992 (1992-01-08) * page 3, line 1 - line 58 * * page 4, line 10 - page 6, line 50 * | 1,3-9 | INV. B25J9/16 |
| Y | * page 5, line 42 - page 6, line 50 * * figures 1-4 * ----- | 2 | |
| X | EP 0 566 741 A (FANUC LTD [JP]) 27 October 1993 (1993-10-27) | 1,3-9 | |
| Y | * page 3, line 1 - page 8, line 55 * * figures 1-5 * ----- | 2 | |
| Y | HASHIMOTO M ET AL: "Experimental study on torque control using harmonic drive built-in torque sensors" 12 May 1992 (1992-05-12), PROCEEDINGS OF THE INTERNATIONAL CONFERENCE ON ROBOTICS AND AUTOMATION NICE, MAY 12 - 14, 1992; [PROCEEDINGS OF THE INTERNATIONAL CONFERENCE ON ROBOTICS AND AUTOMATION], LOS ALAMITOS, IEEE COMP. SOC. PRESS, US, PAGE(S) 2026 - 2031 , XP010027608 ISBN: 978-0-8186-2720-0 * page 2026, column 1 - page 2030, column 1 * ----- | 2 | |

TECHNICAL FIELDS
SEARCHED (IPC)

B25J

The present search report has been drawn up for all claims

| Place of search | Date of completion of the search | Examiner |
|---|---|---|
| The Hague | 12 June 2009 | Barriuso Poy, Alex |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 02 1287

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2009

| Patent document cited in search report | | Publication date | Patent family member(s) | | Publication date |
|---|---|---|---|---|---|
| EP 0464211 | A | 08-01-1992 | DE | 69021048 D1 | 24-08-1995 |
| | | | DE | 69021048 T2 | 14-12-1995 |
| | | | WO | 9110181 A1 | 11-07-1991 |
| | | | JP | 2665984 B2 | 22-10-1997 |
| | | | JP | 3196313 A | 27-08-1991 |
| EP 0566741 | A | 27-10-1993 | DE | 69224516 D1 | 02-04-1998 |
| | | | DE | 69224516 T2 | 18-06-1998 |
| | | | WO | 9308958 A1 | 13-05-1993 |
| | | | JP | 2732159 B2 | 25-03-1998 |
| | | | JP | 5116094 A | 14-05-1993 |
| | | | US | 5493192 A | 20-02-1996 |

EPO FORM P0459

For more details about this annex : see Official Journal of the European Patent Office, No. 12/82

**EP 2 090 407 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008029355 A
- JP 11015511 A
- JP 2005186183 A